(19) **Europäisches Patentamt / European Patent Office / Office européen des brevets**

(11) **EP 3 815 395 B1**

(12) # FASCICULE DE BREVET EUROPEEN

(45) Date de publication et mention
de la délivrance du brevet:
**04.05.2022 Bulletin 2022/18**

(21) Numéro de dépôt: **19744772.5**

(22) Date de dépôt: **26.06.2019**

(51) Classification Internationale des Brevets (IPC):
***H04S 7/00*** *(2006.01)*

(52) Classification Coopérative des Brevets (CPC):
**H04S 7/303;** H04S 7/30

(86) Numéro de dépôt international:
**PCT/FR2019/051568**

(87) Numéro de publication internationale:
**WO 2020/002829 (02.01.2020 Gazette 2020/01)**

(54) **PROCÉDÉ POUR UNE RESTITUTION SONORE SPATIALISÉE D'UN CHAMP SONORE AUDIBLE SÉLECTIVEMENT DANS UNE SOUS-ZONE D'UNE ZONE**

VERFAHREN ZUR RAUMKLANGWIEDERGABE EINES IN EINEM TEILBEREICH EINER FLÄCHE SELEKTIV HÖRBAREN KLANGFELDES

METHOD FOR THE SPATIAL SOUND REPRODUCTION OF A SOUND FIELD WHICH IS SELECTIVELY AUDIBLE IN A SUB-AREA OF AN AREA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2018 FR 1855876**

(43) Date de publication de la demande:
**05.05.2021 Bulletin 2021/18**

(73) Titulaire: **ORANGE**
**92130 Issy-les-Moulineaux (FR)**

(72) Inventeurs:
• **ROUSSEL, Georges**
**92326 CHÂTILLON CEDEX (FR)**
• **NICOL, Rozenn**
**92326 CHÂTILLON CEDEX (FR)**

(74) Mandataire: **Plasseraud IP**
**66, rue de la Chaussée d'Antin**
**75440 Paris Cedex 09 (FR)**

(56) Documents cités:
**WO-A1-2016/180493     WO-A1-2018/001490**
**WO-A1-2018/106163     US-A1- 2018 027 350**

• **NELSON P A ET AL: "ADAPTIVE INVERSE FILTERS FOR STEREOPHONIC SOUND REPRODUCTION", IEEE TRANSACTIONS ON SIGNAL PROCESSING, IEEE SERVICE CENTER, NEW YORK, NY, US, vol. 40, no. 7, 1 juillet 1992 (1992-07-01), pages 1621-1632, XP000307653, ISSN: 1053-587X, DOI: 10.1109/78.143434**

**Description**

L'invention se place dans le domaine de l'audio spatialisée et du contrôle de champs sonores. Le procédé a pour but de reproduire différents champs sonores dans une même zone, en utilisant le même système de haut-parleurs. Plus précisément, le procédé cherche à rendre un champ sonore audible dans une première sous-zone et inaudible dans une deuxième sous-zone. Le procédé est notamment basé sur la maximisation du contraste de niveau sonore entre les deux sous-zones de la zone.

Actuellement, les méthodes de contrôle de champs sonores permettent de réaliser un contraste important du niveau sonore entre les différentes zones d'écoute. Toutefois, elles ne prennent pas en compte le champ sonore induit dans la sous-zone dans laquelle le champ sonore est à rendre inaudible. En effet, le champ sonore cible à reproduire dans cette sous-zone est caractérisé par une pression acoustique nulle. Ainsi, en ne tenant pas compte du champ sonore induit, le champ sonore réellement reproduit dans cette sous-zone n'est jamais caractérisé par une pression acoustique nulle, bien que le contraste de niveau sonore entre les deux sous-zones soit très important. On connaît notamment le document « Personal Sound Zones : Delivering interface-free audio to multiple listeners », T. Betlehem, W. Zhang, M. A. Poletti, et T. Abhayapala, IEEE, n° 1053-5888/15, p. 81-91, mars 2015. De telles méthodes ne permettent pas d'obtenir un champ sonore homogène sur l'ensemble de la sous-zone dans lequel le champ sonore ne doit pas être reproduit.

La présente invention vient améliorer la situation.

A cet effet, elle propose un procédé assisté par des moyens informatiques, pour une restitution sonore spatialisée à partir d'un réseau de haut-parleurs, en vue d'une diffusion d'un champ sonore choisi, audible sélectivement dans une première sous-zone prédéterminée d'une zone couverte par les haut-parleurs, ladite zone comportant en outre une deuxième sous-zone dans laquelle on cherche à rendre inaudible ledit champ sonore choisi,
dans lequel, les haut-parleurs étant alimentés par des signaux de commande respectifs pour émettre chacun un signal audio en continu, le procédé comprend itérativement et en continu :

- estimation d'une pression acoustique dans la deuxième sous-zone, au moins en fonction des signaux de commande respectifs des haut-parleurs, et d'un poids initial respectif des signaux de commande des haut-parleurs,
- calcul d'une erreur entre la pression acoustique estimée et une pression acoustique cible, souhaitée dans la deuxième sous-zone,
- et, calcul et application de poids respectifs aux signaux de commande des haut-parleurs, en fonction de ladite erreur,

le calcul de la pression acoustique dans la deuxième sous-zone étant mis en œuvre à nouveau en fonction des signaux de commande respectifs, pondérés, des haut-parleurs, chaque poids respectif appliqué à un haut-parleur (HP1,...,HPN) comprenant un premier terme correspondant à un poids respectif calculé à une itération précédente et un deuxième terme fonction de l'erreur.

Le procédé ne se base pas uniquement sur le contraste sonore souhaité entre le niveau sonore des deux sous-zones. Cela permet, à chaque itération, de prendre en compte le champ sonore effectivement restitué dans la deuxième sous-zone. Ainsi, à chaque nouvelle itération, les signaux de commande des haut-parleurs sont pondérés peu à peu, de manière à ce que le champ sonore dans la deuxième sous-zone, caractérisé par sa pression acoustique, atteigne la valeur du champ sonore cible, caractérisé par sa pression acoustique cible.

Selon une réalisation, le procédé comporte préalablement une détermination de distances entre au moins un point de la deuxième sous-zone et des positions respectives de haut-parleurs, pour en déduire des fonctions de transfert acoustiques respectives des haut-parleurs en ledit point,

> ledit point correspondant ainsi à une position de microphone virtuel,
> l'estimation de la pression acoustique dans la deuxième sous-zone étant alors effectuée en tenant compte d'un poids initial appliqué à chaque haut-parleur, et de la fonction de transfert propre à chaque haut-parleur en le microphone virtuel dans la deuxième sous-zone,
> et comportant en outre une détermination de distances entre au moins un point de la première sous-zone et des positions respectives de haut-parleurs, pour en déduire des fonctions de transfert acoustiques respectives des haut-parleurs en ledit point de la première sous-zone,
> ledit point correspondant ainsi à une position d'un deuxième microphone virtuel.

Selon une variante, le point de la deuxième sous-zone peut correspondre à un microphone réel.

La création d'un microphone virtuel dans chacune des sous-zones permet d'estimer les fonctions de transferts de chaque couple haut-parleur/microphone virtuel, de sorte que la pression acoustique est estimée de manière précise.

Selon une réalisation, on prévoit une pluralité de points au moins dans la deuxième sous-zone formant les positions respectives d'une pluralité de microphones virtuels, pour estimer une pluralité de pressions acoustiques respectives dans la deuxième sous-zone en tenant compte du poids respectif appliqué à chaque haut-parleur et des fonctions de transfert propres à chaque haut-parleur en chaque microphone virtuel.

De cette manière, la pression acoustique est estimée en une pluralité de points de la deuxième sous-zone. Cela permet d'appliquer des poids à chaque haut-parleur en tenant compte des écarts de pressions acoustiques pouvant survenir en différents points de la deuxième sous-zone. L'estimation de la pression acoustique est donc réalisée de manière homogène et précise sur l'ensemble de la zone. La précision du procédé en est alors augmentée de manière considérable.

Selon une réalisation, la pression cible dans la deuxième sous-zone est évaluée en fonction d'un contraste sonore souhaité entre la première sous-zone et la deuxième sous-zone, et comportant une estimation de :

- la pression acoustique dans la première sous-zone en tenant compte du poids respectif appliqué à chaque haut-parleur et de la fonction de transfert propre à chaque haut-parleur en le au moins un deuxième microphone virtuel,
- et de là, le contraste sonore en fonction de la pression acoustique estimée dans la première sous-zone et la pression acoustique estimée dans la deuxième sous-zone.

Ainsi, la pression acoustique cible dans la deuxième sous-zone est déterminée en tenant compte, à chaque itération, de la pression acoustique dans chacune des sous-zones. Le niveau de contraste désiré est alors contrôlé à chaque itération, ce qui a l'avantage de prendre en compte d'éventuels effets de masquage perceptif fréquentiel du système auditif. Le but n'est plus alors d'uniquement maximiser le contraste sonore entre les deux sous-zones, mais bien de contrôler le contraste sonore souhaité en fonction des pressions acoustiques effectivement estimées dans chaque sous-zone.

Selon une réalisation, à chaque itération, un coefficient d'atténuation, défini par la différence entre le contraste sonore souhaité et le contraste sonore estimé entre la première sous-zone et la deuxième sous-zone, est appliqué à la pression acoustique dans la deuxième sous-zone,

la pression cible dans la seconde sous-zone prenant alors la valeur de la pression acoustique atténuée de la deuxième sous-zone.

Ainsi, le procédé ne cherche pas à produire une pression acoustique nulle dans la deuxième sous-zone, mais au contraire à spécifier le champ sonore cible, caractérisé par sa pression acoustique, dans la deuxième sous-zone. L'efficacité du procédé en est augmentée. De plus, dans le cas d'une pluralité de microphones virtuels, le coefficient d'atténuation est défini en chaque point correspondant aux microphones virtuels. Le procédé permet alors d'obtenir un contraste sonore homogène entre les deux sous-zones, en tous points des deux sous-zones.

Selon une réalisation, le procédé comporte préalablement, pour chaque auditeur :

- obtenir des données de géolocalisation d'un auditeur dans la zone au moyen d'un capteur de position,
- définir la première sous-zone comme correspondant auxdites données de géolocalisation ainsi que la position dudit au moins un deuxième microphone virtuel dans ladite première sous-zone,
- définir la deuxième sous-zone comme étant complémentaire de la première sous-zone ainsi que la position dudit au moins un premier microphone virtuel dans ladite deuxième sous-zone.

Le procédé permet donc de personnaliser la disposition des deux sous-zones en fonction de la position d'un auditeur.

Selon une réalisation, le procédé comporte en outre, pour chaque auditeur,

- obtenir répétitivement des données de géolocalisation de l'auditeur dans la zone au moyen d'un capteur de position, et en cas de changement des données de géolocalisation :

  ➢ définir dynamiquement la première sous-zone comme correspondant auxdites données de géolocalisation ainsi que la position dudit au moins un deuxième microphone virtuel dans ladite première sous-zone,
  ➢ définir dynamiquement la deuxième sous-zone comme étant complémentaire de la première sous-zone ainsi que la position dudit au moins un premier microphone virtuel dans ladite deuxième sous-zone, les distances entre ledit au moins un premier microphone virtuel et les positions respectives des haut-parleurs étant calculées dynamiquement pour en déduire les fonctions de transfert acoustiques respectives des haut-parleurs en ledit au moins un premier microphone virtuel, et

  l'estimation de la pression acoustique dans la deuxième sous-zone étant alors effectuée en tenant compte du poids respectif appliqué à chaque haut-parleur,

- chaque poids respectif appliqué à un haut-parleur comprenant un premier terme correspondant à un poids respectif calculé à une itération précédente et un deuxième terme fonction de l'erreur, un coefficient d'oubli atténuant le terme correspondant au poids calculé à l'itération précédente étant alors appliqué à chaque poids respectif.

Ainsi, il est possible de définir dynamiquement les deux sous-zones en fonction de la position d'un auditeur. Plus précisément, la première sous-zone, dans laquelle le champ sonore est audible, suit perpétuellement l'auditeur. L'application d'un poids comprenant un coefficient d'oubli permet de ne pas relancer le procédé à chaque déplacement de l'auditeur, ce qui renforce grandement son efficacité.

Selon une réalisation, le procédé comporte en outre, itérativement et en continu :

- estimation de la pression acoustique dans la première sous-zone, en fonction desdits signaux de commande respectifs des haut-parleurs en le au moins un deuxième microphone virtuel et du poids respectif des signaux de commande des haut-parleurs,
- calcul d'une dégradation entre la pression acoustique estimée dans la première sous-zone et une pression acoustique cible, souhaitée dans la première sous-zone, ladite pression acoustique cible étant préalablement définie,
- et, application de poids respectifs aux signaux de commande des haut-parleurs, en fonction de ladite dégradation, afin que la pression acoustique dans la première sous-zone atteigne la pression cible,
- le calcul de la pression acoustique dans la première sous-zone et dans la deuxième sous-zone étant respectivement mis en œuvre à nouveau en fonction des signaux de commande respectifs, pondérés, des haut-parleurs.

Le champ sonore dans la première sous-zone est également contrôlé en continu. De cette manière, le champ sonore cible, caractérisé par la pression acoustique cible dans la sous-zone, peut être continuellement atteint dans la première sous-zone. Les dégradations sonores sont compensées à chaque itération.

Selon une réalisation, le nombre d'itérations du procédé, pour que la pression acoustique de la première sous-zone atteigne la pression acoustique cible, souhaitée dans la première sous-zone, est compris entre 10 et 1000, de préférence entre 200 et 800, et de préférence entre 400 et 500.

Par « atteindre la pression acoustique cible », on entend que l'erreur entre la pression acoustique de la première sous-zone et la pression acoustique cible, souhaitée dans la première sous-zone est négligeable. Notamment, l'erreur peut être définie à partir de données psycho-acoustiques d'utilisateurs. Ces données psycho-acoustiques peuvent être obtenues par des mesures visant à déterminer un seuil de perception pour des utilisateurs. Notamment, le seuil de perception peut évoluer en fonction des signaux sonores constituant la scène sonore ou de la fréquence des signaux sonores.

Il apparaît que le procédé présente une très grande efficacité, compte tenu du petit nombre d'itérations avant que le procédé ne converge.

Selon une réalisation, le champ sonore choisi est un premier champ sonore, un deuxième champ sonore choisi étant en outre diffusé, audible sélectivement dans la deuxième sous-zone, et dans lequel on cherche à rendre le deuxième champ sonore inaudible dans la première sous-zone, les haut-parleurs étant alimentés par des premiers signaux de commande respectifs pour émettre chacun un signal audio en continu correspondant au premier champ sonore choisi, et par des deuxièmes signaux de commande respectifs pour émettre chacun un signal audio en continu correspondant au deuxième champ sonore choisi,
les étapes du procédé selon l'invention étant appliquées à la première sous-zone, de manière à rendre inaudible le deuxième champ sonore dans la première sous-zone.

Ainsi, le procédé peut également être mis en œuvre dans le cas où deux champs sonores sont diffusés dans une même zone. Le procédé peut également être mis en œuvre pour plus de deux champs sonores.

Selon une réalisation, chaque sous-zone comprend au moins un microphone virtuel et deux haut-parleurs, et de préférence chaque sous-zone comprend au moins une dizaine de microphones virtuels et au moins une dizaine de haut-parleurs.

L'invention vise également un système de restitution sonore spatialisée à partir d'un réseau de haut-parleurs, en vue d'une diffusion d'un champ sonore choisi, audible sélectivement dans une première sous-zone prédéterminée d'une zone couverte par les haut-parleurs, ladite zone comportant en outre une deuxième sous-zone dans laquelle on cherche à rendre inaudible ledit champ sonore choisi, comprenant une unité de traitement adaptée pour le traitement et la mise en œuvre du procédé selon l'invention.

D'autres avantages et caractéristiques de l'invention apparaîtront à la lecture de la description détaillée ci-après d'exemples de réalisation de l'invention, et à l'examen des dessins annexés sur lesquels :

- la figure 1 représente un exemple de système selon un mode de réalisation de l'invention,
- les figures 2a et 2b illustrent, sous la forme d'un ordinogramme, les principales étapes d'un mode de réalisation particulier du procédé,
- la figure 3 illustre de façon schématique un mode de réalisation dans lequel les deux sous-zones sont définies dynamiquement en fonction des données de géolocalisation d'un auditeur.

Les modes de réalisation décrits en référence aux figures peuvent être combinés.

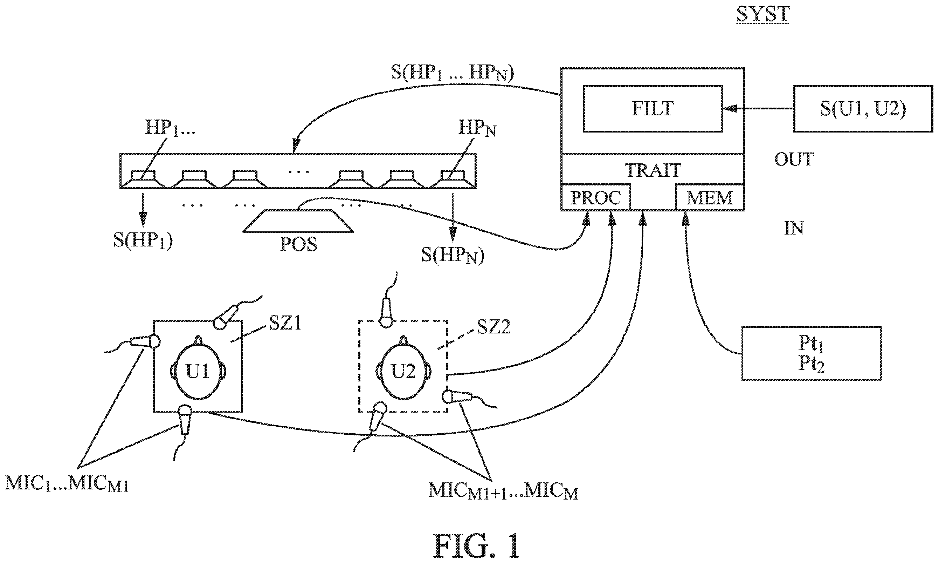

La figure 1 illustre schématiquement un système SYST selon un exemple de réalisation. Le système SYST comprend un réseau de haut-parleurs HP comprenant N haut-parleurs ($HP_1$,...,$HP_N$), avec N au moins égal à 2, et de préférence au moins égal à 10. Le réseau de haut-parleurs HP couvre une zone comprenant une première sous-zone SZ1 et une deuxième sous-zone SZ2. Les haut-parleurs HP sont alimentés par des signaux de commande respectifs pour émettre chacun un signal audio en continu, en vue d'une diffusion sonore spatialisée d'un champ sonore choisi. Le champ sonore choisi est à rendre audible dans une des sous-zones, et à rendre inaudible dans l'autre sous-zone. Par exemple, le champ sonore choisi est audible dans la première sous-zone SZ1. Le champ sonore choisi est à rendre inaudible dans la deuxième sous-zone SZ2. Les haut-parleurs peuvent être définis par leur position dans la zone.

Selon un exemple de réalisation, chaque sous-zone SZ peut être définie par les données de géolocalisation d'un auditeur. Notamment, les données de géolocalisation d'un auditeur U sont obtenues au moyen d'un capteur de position POS. Il est alors possible de définir, en fonction des données de géolocalisation de l'auditeur, la première sous-zone SZ1, dans laquelle l'auditeur U1 entend le champ sonore choisi. La sous-zone SZ1 a par exemple des dimensions prédéfinies. Notamment, la première sous-zone peut correspondre à un périmètre de quelques dizaines de centimètres à quelques dizaines de mètres, dont l'auditeur U1 est le centre. La deuxième sous-zone SZ2, dans laquelle le champ sonore choisi est à rendre inaudible, peut être définie comme la sous-zone complémentaire de la première sous-zone SZ1. L'auditeur U2, présent dans la deuxième sous-zone SZ2 n'entend donc pas le champ sonore choisi.

Selon une variante de réalisation, la définition des sous-zones n'est pas axée sur la position des auditeurs U mais est prédéfinie et constante. Cela peut notamment être le cas dans des musées, où un champ sonore différent est diffusé en association avec chaque tableau. Un auditeur entend alors uniquement le champ sonore associé au tableau devant lequel il se trouve. Le périmètre autour du tableau représente alors la première sous-zone, tandis que le reste du musée représente la deuxième sous-zone.

La zone est en outre couverte par des microphones MIC. Plus précisément, chaque sous-zone SZ comprend au moins un microphone MIC. Dans un exemple de réalisation, la zone est couverte par un réseau de M microphones MIC, avec M au moins égal à 2 et de préférence au moins égal à 10. Par exemple, la première sous-zone SZ1 est couverte par les microphones $MIC_1$ à $MIC_{M1}$ et la deuxième sous-zone SZ2 est couverte par les microphones $MIC_{M1+1}$ à $MIC_M$. Dans une réalisation particulière, les microphones MIC sont des microphones virtuels. Dans la suite de la description, le terme « microphone MIC » est utilisé, les microphones pouvant être réels ou virtuels. Les microphones MIC sont repérés par leur position dans chacune des sous-zones SZ1, SZ2.

Dans un exemple de réalisation dans lequel le système comprend des microphones virtuels, des points sont définis dans chacune des sous-zones. Les points sont repérés par leurs positions respectives. Un microphone virtuel MIC est associé à chacun des points, de sorte que la position de chaque microphone virtuel est celle du point auquel il est associé.

Dans un exemple de réalisation, les points sont définis une seule fois, la position des microphones virtuels MIC étant constante. Selon une autre réalisation, les points peuvent être redéfinis perpétuellement, de sorte que la position des microphones virtuels évolue. Il en est de même dans le cas où des microphones réels sont utilisés.

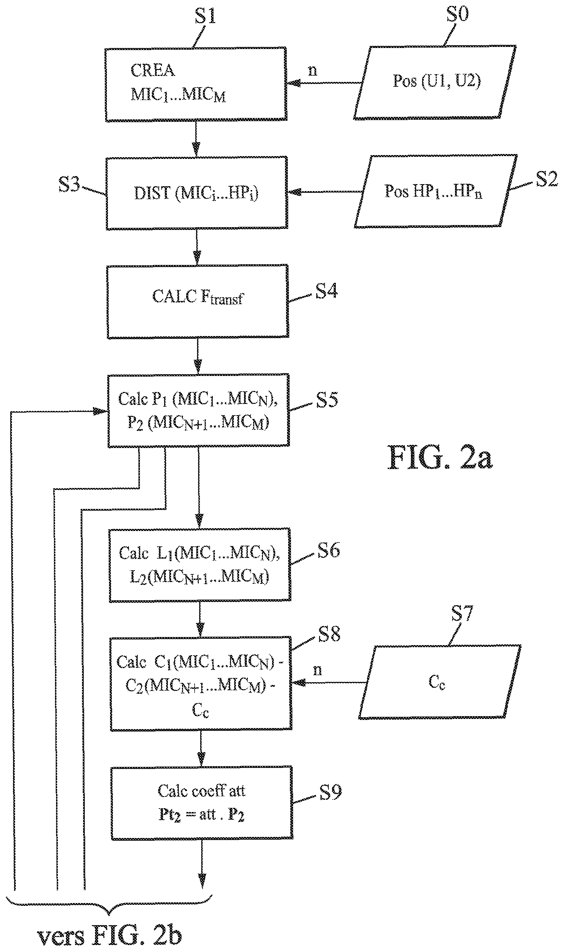

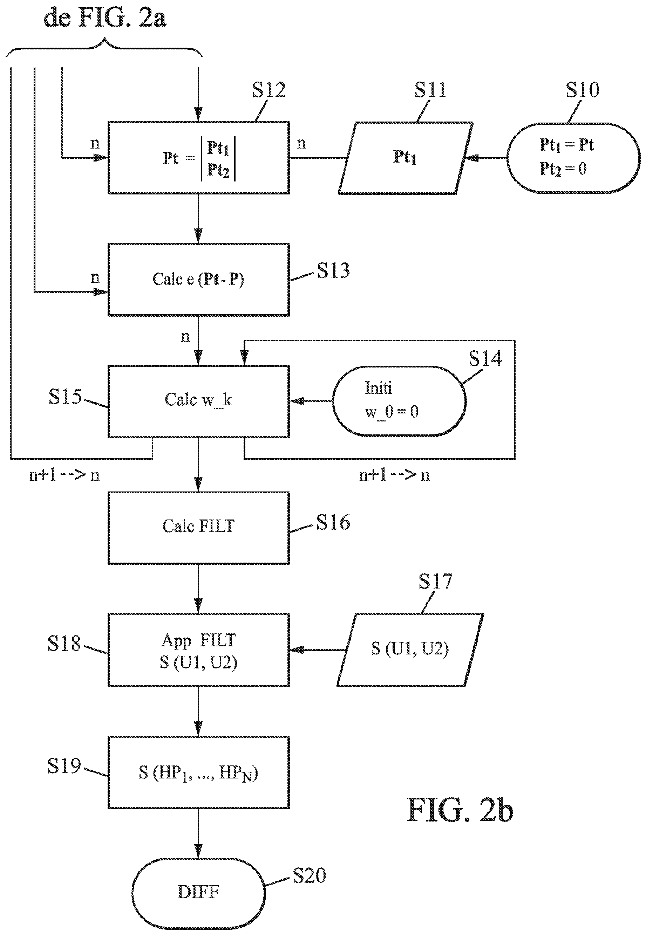

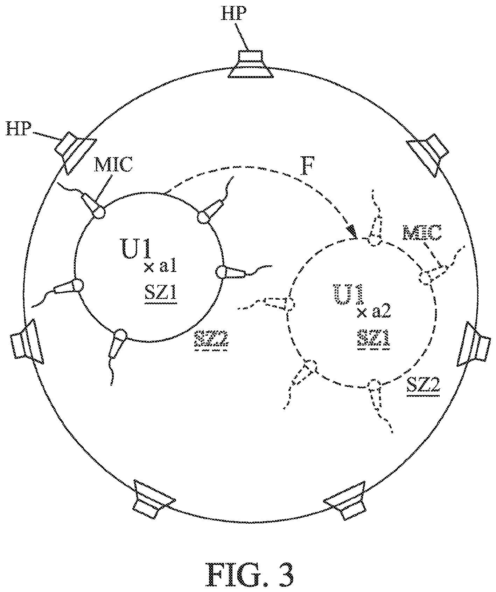

Le système SYST comprend en outre une unité de traitement TRAIT apte à mettre en œuvre les étapes du procédé. L'unité de traitement TRAIT comprend notamment une mémoire, formant un support de stockage d'un programme d'ordinateur comprenant des portions de code pour la mise en œuvre du procédé décrit ci-après en référence aux figures 2 et 3. L'unité de traitement TRAIT comprend en outre un processeur PROC apte à exécuter les portions de code du programme d'ordinateur.

L'unité de traitement TRAIT reçoit en entrée la position des microphones MIC, les données de géolocalisation des auditeurs U, les positions de chaque haut-parleur HP, les signaux audio à reproduire $S(U_1...U_S)$ destinés respectivement aux utilisateurs $U_1$ à $U_S$ et le champ sonore cible $Pt_1, Pt_2$ à atteindre dans chaque sous-zone. A partir de ces données, l'unité de traitement TRAIT calcul le filtre FILT à appliquer aux signaux $S(U_1...U_S)$ afin de restituer les champs sonores cibles $Pt_1, Pt_2$ dans les sous-zones. L'unité de traitement TRAIT délivre en sortie les signaux filtrés $S(HP_1...HP_N)$ à diffuser respectivement sur les haut-parleurs $HP_1$ à $HP_N$

Le système SYST trouve de nombreuses applications. Par exemple, le système SYST peut être destiné à des musées. Par exemple, des haut-parleurs HP sont disposés dans le musée et diffusent des signaux sonores correspondant notamment à des commentaires ou explications des œuvres d'art. Devant chaque œuvre d'art peut être définie une première sous-zone, le reste du musée formant la deuxième sous-zone dans laquelle les commentaires correspondant à cette œuvre d'art sont à rendre inaudible. Dans cette application, l'unité de traitement TRAIT peut être intégrée à un serveur du musée.

Une autre application peut être celle du visionnage de contenus multimédia, par exemple pour des particuliers visionnant un film. Ainsi, l'unité de traitement TRAIT peut être installée dans un boîtier de téléviseur. Une première sous-zone dans laquelle les signaux sonores du film sont audibles peut être un périmètre autour du téléviseur, et la deuxième sous-zone dans laquelle les signaux sonores sont à rendre inaudibles peut être le reste de l'habitation.

En variante, dans le cas où plusieurs auditeurs sont présents et souhaitent entendre des signaux sonores différents, par exemple dans différentes langues, plusieurs sous-zones peuvent être formées en fonction des positions de chacun des utilisateurs. Ainsi, une première sous-zone est formée autour de chaque utilisateur, le reste de la maison formant la deuxième sous-zone. Chaque utilisateur entend ainsi les signaux sonores dans la langue choisie tandis que ces signaux sonores ne sont pas audibles dans le reste de l'habitation.

Les figures 2a et 2b illustrent les principales étapes du procédé selon l'invention. Les étapes du procédé sont mises en œuvre par l'unité de traitement TRAIT de manière continue et en temps réel.

Le procédé tel que décrit en référence aux figures 2a et 2b a pour but de rendre inaudible le champ sonore choisi dans l'une des sous-zones, par exemple dans la deuxième sous-zone SZ2. Le procédé est basé sur une estimation de pressions acoustiques dans chacune des sous-zones, de manière à appliquer un niveau de contraste sonore souhaité entre les deux sous-zones. A chaque itération, les signaux audio S(U1, U2) sont filtrés en fonction des pressions acoustiques estimées et du niveau de contraste sonore pour obtenir les signaux de commande S(HP$_1$...HP$_N$) à diffuser sur les haut-parleurs.

Selon l'exemple de réalisation, non limitatif, illustré sur les figures 2a, 2b, les sous-zones SZ1, SZ2 sont définies par la position d'au moins un auditeur U1, U2.

A l'étape S0, les données de géolocalisation d'au moins un des deux auditeurs UI, U2 sont déterminées, par exemple au moyen d'un capteur de position POS. A partir de ces données de géolocalisation, les deux sous-zones SZ1, SZ2 sont définies. Par exemple, la première sous-zone correspond aux données de géolocalisation du premier auditeur U1. La première sous-zone SZ1 est par exemple définie comme étant une zone de quelques dizaines de centimètres à quelques dizaines de mètres de circonférence, dont le premier auditeur U1 est le centre. La deuxième sous-zone SZ2 peut être définie comme étant complémentaire de la première sous-zone SZ1.

A l'étape S1, le réseau de microphones MIC est défini. Par exemple, dans le cas de microphones virtuels, au moins un point, et de préférence une pluralité de points, chacun associé à une position dans l'une des sous-zones SZ1, SZ2 est défini. Notamment, chaque sous-zone SZ1, SZ2 comprend au moins un point. De préférence, chaque sous-zone SZ1, SZ2 comprend une dizaine de points. Les positions des points dans les sous-zones SZ1, SZ2 définissent les positions des microphones MIC virtuels dans chaque sous-zone.

A l'étape S2, la position de chaque haut-parleur HP est déterminée. Notamment, la zone comprend un réseau de haut-parleurs comprenant au moins deux haut-parleurs HP. De préférence, le réseau de haut-parleurs comprend une dizaine de haut-parleur HP. Les haut-parleurs HP peuvent être répartis dans la zone de manière à ce que l'intégralité de la zone soit couverte par les haut-parleurs.

A l'étape S3, une distance entre chaque couple de haut-parleur HP et de microphone MIC est calculée. Cela permet de pouvoir calculer chacune des fonctions de transfert Ftransf, pour chaque couple haut-parleur HP/microphone MIC, à l'étape S4.

Autrement dit, le champ sonore cible peut être

$$\mathbf{Pt}(\omega,n) = \begin{bmatrix} Pt_1 \\ Pt_2 \end{bmatrix}$$

défini comme un vecteur , pour l'ensembles des microphones MIC, à chaque instant *n* pour une pulsation $\omega = 2\pi f$, *f* étant la fréquence. Les microphones MIC$_1$ à MIC$_M$ sont disposés aux positions $x_{MIC}$ = [$MIC_1$, ..., $MIC_M$] et capturent un ensemble de pressions acoustiques regroupés dans le vecteur $\mathbf{P}(\omega,n)$.

Le champ sonore est reproduit par les haut-parleurs (HP$_1$,...,HP$_N$) fixes et ayant comme position respective $x_{HP}$= [$HP_1$,...,$HP_N$]. Les haut-parleurs (HP$_1$,...,HP$_N$) sont pilotés par un ensemble de poids regroupés dans le vecteur $\mathbf{q}(\omega,n) = [q_1(\omega,n),...,q_N(\omega,n)]^T$. L'exposant $^T$ est l'opérateur de transposition.

Le trajet de propagation du champ sonore entre chaque couple de haut-parleur HP et microphone MIC peut être défini par un ensemble de fonctions de transferts $\mathbf{G}(\omega,n)$ assemblées dans la matrice

$$\mathbf{G}(\omega,n) = \begin{bmatrix} G_{11}(\omega,n) & \cdots & G_{1N}(\omega,n) \\ \vdots & \ddots & \vdots \\ G_{M1}(\omega,n) & \cdots & G_{MN}(\omega,n) \end{bmatrix}$$

Avec les fonctions de transfert définies comme étant : $G_{ml} = \frac{j\rho ck}{4\pi R_{ml}} e^{-jkR_{ml}}$ , avec R$_{ml}$ la distance entre un couple haut-parleur et microphone, k le nombre d'onde, $\rho$ la masse volumique de l'air et c la célérité du son.

A l'étape S5, les pressions acoustiques $\mathbf{P}_1$ et $\mathbf{P}_2$ sont déterminées respectivement dans la première sous-zone SZ1 et dans la deuxième sous-zone SZ2.

Selon un exemple de réalisation, la pression acoustique $\mathbf{P}_1$ dans la première sous-zone SZ1 peut être la pression acoustique issue des signaux diffusés par les haut-parleurs dans la première sous-zone. La pression acoustique $\mathbf{P}_2$ dans la deuxième sous-zone, dans laquelle les signaux sonores sont à rendre inaudibles, peut correspondre à la pression acoustique induite issue des signaux diffusés par les haut-parleurs alimentés par les signaux de commande associés à la pression $\mathbf{P}_1$ induite dans la première sous-zone.

Les pressions acoustiques $\mathbf{P}_1$, $\mathbf{P}_2$ sont déterminées à partir des fonctions de transfert Ftransf calculées à l'étape S4, et d'un poids initial appliqué aux signaux de commande de chaque haut-parleur. Le poids initial appliqué aux signaux de commande de chacun des haut-parleurs est égal à zéro. Puis, le poids appliqué aux signaux de commande tend à varier à chaque itération, tel que décrit ci-après.

Selon cet exemple de réalisation, les pressions acoustiques $\mathbf{P}_1$, $\mathbf{P}_2$ comprennent chacun l'ensemble des pression acoustiques déterminées en chacune des positions des microphones virtuels. Ainsi, la pression acoustique estimée dans les sous-zones est plus représentative. Cela permet d'obtenir un résultat homogène en sortie de procédé.

En variante, une pression acoustique déterminée en une seule position $\mathbf{P}_1$ , $\mathbf{P}_2$ est respectivement estimée pour la première sous-zone SZ1 et pour la deuxième sous-zone SZ2. Cela permet de limiter le nombre de calculs, et donc de diminuer le temps de traitement et par conséquent la réactivité du système.

Plus précisément, les pressions acoustiques $P_1$, $P_2$ dans chacune des sous-zones peuvent être rassemblées sous la forme d'un vecteur défini comme :

$$\mathbf{p}(\omega, n) = \begin{bmatrix} P_1 \\ P_2 \end{bmatrix} = \mathbf{G}(\omega, n)\mathbf{q}(\omega, n)$$

A l'étape S6, les niveaux sonores $L_1$ et $L_2$ sont déterminés respectivement dans la première sous-zone SZ1 et dans la deuxième sous-zone SZ2. Les niveaux sonores $L_1$ et $L_2$ sont déterminés en chaque position des microphones MIC. Cette étape permet de convertir les valeurs des pressions acoustiques estimées $P_1$, $P_2$ en des valeurs mesurables en décibels. De cette manière, le contraste sonore entre la première et la deuxième sous-zone peut être calculé. A l'étape S7, un niveau de contraste sonore souhaité $C_c$ entre la première sous-zone et la deuxième sous-zone est défini. Par exemple, le contraste sonore souhaité $C_c$ entre la première sous-zone SZ1 et la deuxième sous-zone SZ2 est préalablement défini par un concepteur en fonction du champ sonore choisi et/ou de la perception sonore des auditeurs Ul, U2 dans chaque sous-zone.

Plus précisément, le niveau sonore L pour un microphone peut être défini par $L = 20\ \log_{10}\left(\frac{|P|}{p_0}\right)$, avec $p_o$ la pression acoustique de référence, c'est-à-dire le seuil de perception.

Ainsi, le niveau sonore moyen dans une sous-zone peut être défini comme :

$$L = 10\ \log_{10}\left(\frac{P^H P/_M}{p_0^2}\right)$$

, avec $P^H$ la transposée conjuguée du vecteur de pressions acoustiques dans la sous-zone et M le nombre de microphones dans cette sous-zone.

A partir du niveau sonore $L_1$, $L_2$ dans les deux sous-zones, il est possible de calculer le contraste sonore estimé C entre les deux sous-zones : $C = L_1 - L_2$.

A l'étape S8, la différence entre le contraste sonore estimé entre les deux sous-zones et le contraste sonore souhaité $C_c$ est calculée. A partir de cette différence, un coefficient d'atténuation peut être calculé. Le coefficient d'atténuation est calculé et appliqué à la pression acoustique estimée $P_2$ dans la deuxième sous-zone à l'étape S9. Plus précisément, un coefficient d'atténuation est calculé et appliqué à chacune des pressions acoustiques estimées $P_2$ en chacune des positions des microphones MIC de la deuxième sous-zone SZ2. La pression acoustique cible $Pt_2$ dans la deuxième sous-zone prend alors la valeur de la pression acoustique $P_2$ atténuée de la deuxième sous-zone.

Mathématiquement, la différence $C_\xi$ entre le contraste sonore estimé C et le contraste sonore souhaité $C_c$ peut être calculée comme suit $C_\xi = C - C_c = L_1 - L_2 - C_c$ On peut alors calculer le coefficient d'atténua-tion $\xi = 10^{\frac{c_\xi}{20}}$.

Ce coefficient est déterminé par l'amplitude de la pression acoustique à donner à chaque microphone pour que le niveau sonore dans la deuxième sous-zone soit homogène. Lorsque le contraste est équivalent à celui correspondant au contraste sonore souhaité $C_C$ pour un microphone dans la deuxième sous-zone, alors $C_\xi \approx 0$ donc $\xi \approx 1$. Cela signifie que la pression acoustique estimée en ce microphone correspond à la valeur de pression cible dans la deuxième sous-zone.

Lorsque la différence entre le contraste sonore estimé C et le contraste sonore souhaité $C_c$ est négative $C_\xi < 0$, cela signifie que le contraste souhaité $C_c$ n'est pas encore atteint, et donc que l'on doit obtenir une amplitude de pression plus faible à ce microphone qu'elle ne l'est actuellement.

Lorsque la différence entre le contraste sonore estimé C et le contraste sonore souhaité $C_c$ est positive $C_\xi > 0$, la pression acoustique en ce point est trop faible. Elle doit donc être augmentée pour correspondre au contraste sonore souhaité dans la deuxième sous-zone.

Le principe est donc d'utiliser le champ de pression présent dans la deuxième sous-zone qui est induit par la pression acoustique dans la première sous-zone, puis d'atténuer ou d'amplifier les valeurs individuelles de pressions acoustiques estimées en chaque microphone, de sorte à ce qu'elles correspondent au champ sonore cible dans la deuxième sous-zone sur l'ensemble des microphones. Pour tous les microphones, on définit le vecteur : $\xi = [\xi_1, ..., \xi_m, ..., \xi_M]^T$.

Ce coefficient est calculé à chaque itération et peut donc évoluer. Il peut donc être écrit sous la forme $\xi(\mathbf{n})$.

En variante, dans le cas où une unique pression acoustique $P_2$ est estimée pour la deuxième sous-zone SZ2, un seul coefficient d'atténuation est calculé et appliqué à la pression acoustique $P_2$.

Les coefficients d'atténuation sont calculés de manière à répondre au critère de contraste défini par le concepteur. Autrement dit, le coefficient d'atténuation est défini de sorte que la différence entre le contraste sonore entre les deux sous-zones SZ2 et le contraste sonore souhaité $C_c$ soit proche de zéro.

Les étapes S10 à S12 permettent de définir la valeur des pressions acoustiques cibles $Pt_1$, $Pt_2$ dans la première et la deuxième sous-zone SZ1, SZ2.

L'étape S10 comprend l'initialisation des pres-sions acoustiques cibles $Pt_1$, $Pt_2$, respectivement dans la première et la deuxième sous-zone SZ1, SZ2. Les pressions acoustiques cibles $Pt_1$, $Pt_2$ caractérisent le champ sonore cible à diffuser dans les sous-zones. La pression acoustique cible $Pt_1$ dans la première sous-zone SZ1 est définie comme étant une pression cible $Pt_1$, choisie par le concepteur. Plus précisément, la pression cible $Pt_1$ dans la première sous-zone SZ1 est supérieure à zéro, de sorte que le champ sonore cible soit audible dans cette première sous-zone. La pression acoustique cible $Pt_2$ dans la seconde sous-zone est initialisée à zéro. Les pressions cibles $Pt_1$ $Pt_2$ sont ensuite transmises à l'unité de traitement TRAIT à l'étape S11, sous la forme d'un vecteur **Pt.**

A chaque itération, on attribue de nouvelles valeurs de pressions cibles aux pressions cibles $Pt_1$, $Pt_2$ déterminées à l'itération précédente. Cela correspond à l'étape S12. Plus précisément, la valeur de la pression cible $Pt_1$ dans la première sous-zone est celle définie à l'étape S10 par le concepteur. Le concepteur peut modifier cette valeur à tout moment. La pression acoustique cible $Pt_2$ dans la deuxième sous-zone prend la valeur de la pression acoustique $P_2$ atténuée (étape S9). Cela permet, à chaque itération, de redéfinir le champ sonore cible à restituer dans la deuxième sous-zone, en tenant compte de la perception de l'auditeur et des signaux de commande des haut-parleurs. Ainsi, la pression acoustique cible $Pt_2$ de la deuxième sous-zone n'est égale à zéro que lors de la première itération. En effet, dès lors que les haut-parleurs diffusent un signal, un champ sonore est perçu dans la première sous-zone, mais également dans la deuxième sous-zone

Mathématiquement, la pression cible $Pt_2$ dans la deuxième sous-zone est calculée comme suit.

A la première itération, $Pt_2$ est égale à zéro: $Pt_2(0) = 0$ .

A chaque itération, la pression acoustique $P_2$ estimée dans la deuxième sous-zone est calculée. Cette pression acoustique correspond à la pression acoustique induite dans la seconde sous-zone par le rayonnement des haut-parleurs dans la première sous-zone. Ainsi, à chaque itération on a: $P_2(\omega, n) = G_2(\omega,n)q(\omega,n)$, avec $G_2(\omega,n)$ la matrice de fonctions de transfert dans la deuxième sous-zone à l'itération n.

La pression cible $Pt_2$ à l'itération $n + 1$ peut donc être calculée comme $Pt_2(n + 1) = \xi(n) \times P_2$.

A l'étape S13, l'erreur entre la pression cible $Pt_2$ et la pression estimée $P_2$ dans la deuxième sous-zone est calculée. L'erreur est due au fait qu'un pas d'adaptation $\mu$ est appliqué de manière à ce que la pression cible $Pt_2$ ne soit pas atteinte immédiatement. La pression cible $Pt_2$ est atteinte au bout d'un certain nombre d'itérations du procédé. Cela permet de minimiser les ressources en calcul nécessaires pour atteindre la pression cible $Pt_2$ dans la deuxième sous-zone SZ2. Cela permet en outre d'assurer la stabilité de l'algorithme. De la même manière, le pas d'adaptation $\mu$ est également choisi de sorte que l'erreur calculée à l'étape S13 ait une petite valeur, afin de stabiliser le filtre.

L'erreur calculée à l'étape S13 sert à calculer des poids à appliquer aux signaux de commande des haut-parleurs HP. Plus précisément, à la première itération les poids sont initialisés à zéro (étape S14). Chaque haut-parleur diffuse un signal de commande non pondéré. Puis, à chaque itération, la valeur des poids varie en fonction de l'erreur (étape S15). Ainsi, chaque poids respectif appliqué à un haut-parleur comprend un premier terme correspondant à un poids respectif calculé à une itération précédente et un deuxième terme fonction de l'erreur. Les haut-parleurs diffusent alors un signal de commande pondéré, qui peut être différent à chaque nouvelle itération. Cette modification des signaux de commande explique notamment que les pressions acoustiques $Pt_1$ $Pt_2$ estimées dans les sous-zones SZ1, SZ2 puissent être différentes à chaque itération.

Mathématiquement, les poids q peuvent être calculés comme suit.

$q(n + 1) = q(n)(1-\mu\gamma(n)) + \mu G^H(n)(G(n)q(n)-Pt(n))$, avec $\mu$ le pas d'adaptation pouvant varier à chaque itération et $\gamma(n)$ correspondant, dans un exemple de réalisation, à un facteur d'oubli pouvant varier dans le temps et éventuellement être défini arbitrairement. Afin de garantir la stabilité du filtre, il est avantageux d'éviter que le pas d'adaptation $\mu$ ne soit supérieur à l'inverse de la plus grande valeur propre de $G^H G$.

Les filtres FILT à appliquer aux haut-parleurs sont alors déterminés à l'étape S16. Un filtre par haut-parleur HP est par exemple calculé. Il peut donc y avoir autant de filtres que de haut-parleurs. Le type de filtres appliqués à chaque haut-parleur comprend par exemple une transformée de Fourier inverse.

Les filtres sont alors appliqués aux signaux audio à reproduire $S(U_1, U_2)$ qui ont été obtenus à l'étape S17. L'étape S17 est une étape d'initialisation, mise en œuvre uniquement à la première itération du procédé. Les signaux audio à reproduire $S(U_1, U_2)$ sont destinés respectivement à chacun des auditeurs $U_1$, $U_2$ en fonction de la sous-zone dans laquelle ils se trouvent. A l'étape S18, les filtres FILT sont appliqués aux signaux $S(U_1, U_2)$, en vue d'obtenir N signaux de commande $S(HP_1,...,HP_N)$ filtrés à diffuser respectivement par les haut-parleurs $HP_1$, $HP_N$ à l'étape S19. Les signaux de commande $S(HP_1,...,HP_N)$ sont diffusés respectivement par chaque haut-parleur $(HP_1,...,HP_N)$ du réseau de haut-parleurs à l'étape S20. De manière générale, les haut-parleurs HP diffusent les signaux de commande en continu.

Puis, à chaque itération, les filtres FILT sont calculés en fonction des signaux $S(HP_1..,HP_N)$ filtrés à l'itération précédente et diffusés par les haut-parleurs, tels que perçus par le réseau de microphones. Les filtres FILT sont appliqués aux signaux $S(U_1, U_2)$ pour obtenir de nouveaux signaux de commande $S(HP_1,...,HP_N)$ à diffuser respectivement sur chaque haut-parleur du réseau de haut-parleurs.

Le procédé est alors relancé à partir de l'étape S5 dans laquelle les pressions acoustiques $P_1$, $P_2$ des deux sous-zones SZ1, SZ2 sont estimées.

Du fait des étapes décrites ci-dessus, le nombre d'itérations pour lesquelles le procédé converge, c'est-à-dire pour que la pression acoustique estimée $P_2$ dans la deuxième sous-zone SZ2 soit sensiblement égale à la pression acoustique cible $Pt_2$ dans la deuxième sous-zone, est compris entre 10 et 1000, de préférence entre 200 et 800 et encore plus de préférence entre 400 et 500. Autrement dit, cela correspond au nombre d'itérations pour que l'erreur soit égale à zéro ou sensiblement égale à zéro. Par « sensiblement égale », on entend qu'une marge d'erreur faible puisse exister. La marge d'erreur permet tout de même de rendre inaudible le champ sonore choisi dans la deuxième sous-zone. Lorsque l'erreur est égale, ou sensiblement égale, à zéro, les poids calculés et appliqués aux signaux de commande des haut-parleurs sont les mêmes que ceux calculés et appliqués à l'itération précédente.

Le nombre d'itérations est ainsi relativement faible, ce qui permet un temps de convergence rapide. D'autre part, la mise en œuvre d'un procédé itératif permet de limiter les ressources en calcul nécessaires.

Bien entendu, d'autres exemples de réalisation selon l'invention sont possibles. Notamment, il a été décrit en référence aux figures 2a, 2b que les deux sous-zones SZ1, SZ2 sont définies une seule fois. Plus précisément, les données de géolocalisation d'un auditeur permettent de définir la première sous-zone SZ1, dans laquelle le champ sonore choisi est audible, et par la même de définir le réseau de microphones MIC de la première sous-zone. La deuxième sous-zone SZ2 est alors définie comme étant complémentaire de la première sous-zone SZ1, quelles que soient les données de géolocalisation des autres auditeurs U.

Dans une variante de réalisation illustrée sur la figure 3, les données de géolocalisation de l'auditeur U1 situé dans la première sous-zone SZ1 sont obtenues répétitivement, de sorte que la première sous-zone SZ1, ainsi que le réseau de microphones de la première sous-zone SZ1, sont définis dynamiquement à chaque déplacement de l'auditeur de la première sous-zone SZ1. De la même manière, la deuxième sous-zone SZ2 est redéfinie dynamiquement comme étant complémentaire de la première sous-zone SZ1, quelles que soient les données de géolocalisation des autres auditeurs U.

Sur la figure 3, la première sous-zone SZ1 est définie par la position al de l'auditeur U1 (représentés en traits plein). Le réseau de microphones MIC est défini de manière à couvrir la première sous-zone SZ1. La deuxième sous-zone SZ2 est complémentaire de la première sous-zone SZ1. La flèche F illustre un déplacement de l'auditeur U1 vers une position a2. La première sous-zone SZ1 est alors redéfinie autour de l'auditeur U1 (en traits pointillés). Le réseau de microphones MIC est redéfini de manière à couvrir la nouvelle première sous-zone SZ1. Le reste de la zone représente la nouvelle deuxième sous-zone SZ2. Ainsi, la première sous-zone SZ1 définie initialement par la position al de l'auditeur se trouve dans la deuxième sous-zone SZ2.

Selon cette réalisation, le procédé est relancé, à chaque itération, depuis l'étape S1. Toutefois, la pression cible **Pt₂** souhaitée dans la deuxième sous-zone est estimée en fonction des poids appliqués aux signaux de commande lors des itérations précédentes. Le procédé comprend donc une mémoire des poids calculés aux itérations précédentes, ce qui peut être problématique lorsque les sous-zones sont redéfinies dynamiquement. Une étape supplémentaire peut alors être prévue. Cette étape comprend la détermination d'un coefficient d'oubli, à appliquer aux poids à l'étape S15. Ce coefficient d'oubli permet d'atténuer le terme correspondant au poids calculé à l'itération précédente. De cette manière, le procédé peut tourner en continu, tout en limitant l'erreur due à la redéfinition dynamique des sous-zones. D'autre part, le facteur d'oubli permet de régulariser le système de sorte à éviter une divergence du système.

Comme décrit en référence à l'étape S15 de la figure 2, les poids sont calculés comme suit :
$$\mathbf{q}(n+1) = \mathbf{q}(n)(1- \mu\gamma(n)) + \mu\mathbf{G}^H(n)(\mathbf{G}(n)\mathbf{q}(n) - \mathbf{Pt(n)}),$$
où $\gamma$ est le facteur d'oubli.

Selon une autre réalisation, le procédé comprend une étape de calcul d'une dégradation entre la pression acoustique **P₁** estimée dans la première sous-zone SZ1 et la pression acoustique cible **Pt₁** souhaitée dans la première sous-zone SZ1. Le calcul des poids à l'étape S15 prend en compte le résultat du calcul de la dégradation, de manière à ce que la pression **P₁** dans la première sous-zone SZ1 reste égale à la pression cible **Pt₁** souhaitée. La pression cible **Pt₁** peut rester constante durant toute la mise en œuvre du procédé. En variante, la pression acoustique cible **Pt₁** peut être modifiée par le concepteur à tout moment à l'étape S11. Le procédé est alors relancé à partir de l'étape S5 d'estimation des pressions acoustiques **Pt₁**, **Pt₂** dans les sous-zones, en fonction des signaux de commande pondérés.

Selon une autre variante de réalisation, le champ sonore choisi est un premier champ sonore, au moins un deuxième champ sonore choisi étant diffusé par le réseau de haut-parleurs HP. Le deuxième champ sonore choisi est audible dans la deuxième sous-zone et est à rendre inaudible dans la première sous-zone. Les haut-parleurs sont alimentés par les premiers signaux de commande pour émettre chacun un signal audio en continu correspondant au premier champ sonore choisi, et sont également alimentés par des deuxièmes signaux de commande pour émettre chacun un signal audio en continu correspondant au deuxième champ sonore choisi. Les étapes du procédé telles que décrites ci-avant peuvent être appliquées à la première sous-zone SZ1, de sorte que le deuxième champ sonore choisi soit rendu inaudible dans la première sous-zone SZ1.

Dans cet exemple de réalisation, la définition des première et deuxième sous-zones SZ1, SZ2 peut être effectuée de manière indépendante pour chaque auditeur U présent dans la zone. Par exemple, une première sous-zone SZ1 est définie en fonction de la position d'un premier auditeur Ul, la deuxième sous-zone SZ2 étant définie comme étant complémentaire de la première sous-zone SZ1, quelles que soient les données de géolocalisation de chaque autre auditeur U présent dans la zone. La définition des sous-zones est définie de la même manière pour chacun des auditeurs U présents dans la zone. Ainsi, en se plaçant du point de vue d'un auditeur U à la fois, la zone comprend uniquement deux sous-zones SZ1, SZ2. De manière plus globale, la zone peut être décomposée en autant de sous-zones, dans chacune desquelles un champ sonore différent peut être audible, chaque sous-zone étant définie par la position d'un auditeur dans la zone. Le procédé est alors mis en œuvre en parallèle pour chacune des sous-zones, afin que le champ sonore choisi diffusé dans une sous-zone ne soit pas audible dans le reste de la zone.

Selon un autre exemple de réalisation, les première et deuxième sous-zones ne sont pas complémentaires. Par exemple, dans une zone, une première sous-zone peut être définie par rapport à un premier auditeur U1 et une deuxième sous-zone peut être définie par rapport à un deuxième auditeur U2. Le champ sonore est à rendre audible dans la première sous-zone et inaudible dans la deuxième sous-zone. Le champ sonore dans le restant de la zone peut ne pas être contrôlé.

## Revendications

1. Procédé assisté par des moyens informatiques, pour une restitution sonore spatialisée à partir d'un réseau de haut-parleurs, en vue d'une diffusion d'un champ sonore choisi, audible sélectivement dans une première sous-zone (SZ1) prédéterminée d'une zone couverte par les haut-parleurs ($HP_1$, $HP_N$), ladite zone comportant en outre une deuxième sous-zone (SZ2) dans laquelle on cherche à rendre inaudible ledit champ sonore choisi,

   dans lequel, les haut-parleurs ($HP_1$,...,$HP_N$) étant alimentés par des signaux de commande respectifs ($S(HP_1$,...,$HP_N$)) pour émettre chacun un signal audio en continu, le procédé comprend itérativement et en continu :

      - estimation d'une pression acoustique ($P_2$) dans la deuxième sous-zone (SZ2), au moins en fonction des signaux de commande respectifs ($S(HP_1$,...,$HP_N$)) des haut-parleurs ($HP_1$,...,$HP_N$), et d'un poids initial respectif des signaux de commande ($S(HP_1$,...,$HP_N$)) des haut-parleurs ($HP_1$,...,$HP_N$),
      - calcul d'une erreur entre la pression acoustique estimée ($P_2$) et une pression acoustique cible ($Pt_2$), souhaitée dans la deuxième sous-zone (SZ2),
      - et, calcul et application de poids respectifs aux signaux de commande ($S(HP_1$,...,$HP_N$)) des haut-parleurs, en fonction de ladite erreur,

   le calcul de la pression acoustique ($P_2$) dans la deuxième sous-zone (SZ2) étant mis en œuvre à nouveau en fonction des signaux de commande respectifs ($S(HP_1$,...,$HP_N$)), pondérés, des haut-parleurs ($HP_1$,...,$HP_N$), chaque poids respectif appliqué à un haut-parleur ($HP1$,...,$HPN$) comprenant un premier terme correspondant à un poids respectif calculé à une itération précédente et un deuxième terme fonction de l'erreur.

2. Procédé selon la revendication 1, comportant préalablement une détermination de distances entre au moins un point de la deuxième sous-zone (SZ2) et des positions respectives de haut-parleurs ($HP_1$,...,$HP_N$), pour en déduire des fonctions de transfert acoustiques respectives des haut-parleurs ($HP_1$,...,$HP_n$) en ledit point,

   ledit point correspondant ainsi à une position de microphone virtuel (MIC),
   l'estimation de la pression acoustique ($P_2$) dans la deuxième sous-zone (SZ2) étant alors effectuée en tenant compte d'un poids initial appliqué à chaque haut-parleur ($HP_1$,...,$HP_N$), et de la fonction de transfert propre à chaque haut-parleur ($HP_1$,...,$HP_N$) en le microphone virtuel (MIC) dans la deuxième sous-zone (SZ2),
   et comportant en outre une détermination de distances entre au moins un point de la première sous-zone (SZ1) et des positions respectives de haut-parleurs ($HP_1$,...,$HP_N$), pour en déduire des fonctions de transfert acoustiques respectives des haut-parleurs ($HP_1$,...,$HP_N$) en ledit point de la première sous-zone (SZ1),
   ledit point correspondant ainsi à une position d'un deuxième microphone virtuel (MIC).

3. Procédé selon la revendication 2, dans lequel on prévoit une pluralité de points au moins dans la deuxième sous-zone (SZ2) formant les positions respectives d'une pluralité de microphones virtuels (MIC), pour estimer une pluralité de pressions acoustiques ($P_2$) respectives dans la deuxième sous-zone (SZ2) en tenant compte du poids respectif appliqué à chaque haut-parleur ($HP_1$,...,$HP_N$) et des fonctions de transfert propres à chaque haut-parleur ($HP_1$,...,$HP_N$) en chaque microphone virtuel (MIC).

4. Procédé selon l'une des revendications 2 ou 3, dans lequel la pression cible ($Pt_2$) dans la deuxième sous-zone (SZ2) est évaluée en fonction d'un contraste sonore souhaité ($C_c$) entre la première sous-zone (SZ1) et la deuxième sous-zone (SZ2), et comportant une estimation de :

      - la pression acoustique ($P_1$) dans la première sous-zone (SZ1) en tenant compte du poids respectif appliqué à chaque haut-parleur ($HP_1$,...,$HP_N$) et de la fonction de transfert propre à chaque haut-parleur ($HP_1$,...,$HP_N$) en le au moins un deuxième microphone virtuel (MIC),

- et de là, le contraste sonore (C) en fonction de la pression acoustique estimée ($P_1$) dans la première sous-zone (SZ1) et la pression acoustique estimée dans la deuxième sous-zone ($P_2$).

5. Procédé selon la revendication 4, dans lequel, à chaque itération, un coefficient d'atténuation, défini par la différence entre le contraste sonore souhaité ($C_c$) et le contraste sonore estimé (C) entre la première sous-zone (SZ1) et la deuxième sous-zone (SZ2), est appliqué à la pression acoustique ($P_2$) dans la deuxième sous-zone (SZ2), la pression cible ($Pt_2$) dans la deuxième sous-zone (SZ2) prenant alors la valeur de la pression acoustique atténuée de la deuxième sous-zone.

6. Procédé selon l'une des revendications 2 à 5, comportant préalablement, pour chaque auditeur :

   - obtenir des données de géolocalisation d'un auditeur dans la zone au moyen d'un capteur de position,
   - définir la première sous-zone (SZ1) comme correspondant auxdites données de géolocalisation ainsi que la position dudit au moins un deuxième microphone virtuel (MIC) dans ladite première sous-zone (SZ1),
   - définir la deuxième sous-zone (SZ2) comme étant complémentaire de la première sous-zone (SZ1) ainsi que la position dudit au moins un premier microphone virtuel (MIC) dans ladite deuxième sous-zone (SZ2).

7. Procédé selon l'une des revendications 2 à 6, comportant en outre, pour chaque auditeur :

   - obtenir répétitivement des données de géolocalisation de l'auditeur dans la zone au moyen d'un capteur de position, et en cas de changement des données de géolocalisation :

     ➢ définir dynamiquement la première sous-zone (SZ1) comme correspondant auxdites données de géolocalisation ainsi que la position dudit au moins un deuxième microphone virtuel (MIC) dans ladite première sous-zone (SZ1),
     ➢ définir dynamiquement la deuxième sous-zone (SZ2) comme étant complémentaire de la première sous-zone (SZ1) ainsi que la position dudit au moins un premier microphone virtuel (MIC) dans ladite deuxième sous-zone (SZ2),

   les distances entre ledit au moins un premier microphone virtuel (MIC) et les positions respectives des haut-parleurs ($HP_1$,...,$HP_N$) étant calculées dynamiquement pour en déduire les fonctions de transfert acoustiques respectives des haut-parleurs ($HP_1$,...,$HP_N$) en ledit au moins un premier microphone virtuel (MIC), et l'estimation de la pression acoustique ($P_2$) dans la deuxième sous-zone (SZ2) étant alors effectuée en tenant compte du poids respectif appliqué à chaque haut-parleur ($HP_1$,...,$HP_N$), chaque poids respectif appliqué à un haut-parleur ($HP_1$,...,$HP_N$) comprenant un premier terme correspondant à un poids respectif calculé à une itération précédente et un deuxième terme fonction de l'erreur, un coefficient d'oubli atténuant le terme correspondant au poids calculé à l'itération précédente étant alors appliqué à chaque poids respectif.

8. Procédé selon l'une des revendications 2 à 7, comportant en outre, itérativement et en continu :

   - estimation de la pression acoustique ($P_1$) dans la première sous-zone, en fonction desdits signaux de commande respectifs des haut-parleurs ($S(HP_1,...,HP_N)$) en le au moins un deuxième microphone virtuel (MIC) et du poids respectif des signaux de commande des haut-parleurs,
   - calcul d'une dégradation entre la pression acoustique estimée ($P_1$) dans la première sous-zone (SZ1) et une pression acoustique cible ($Pt_1$), souhaitée dans la première sous-zone, ladite pression acoustique cible ($Pt_1$) étant préalablement définie,
   - et, application de poids respectifs aux signaux de commande des haut-parleurs ($S(HP_1,...,HP_N)$), en fonction de ladite dégradation, afin que la pression acoustique ($P_1$) dans la première sous-zone atteigne la pression cible ($Pt_1$),

   le calcul de la pression acoustique ($P_1$, $P_2$) dans la première sous-zone (SZ1) et dans la deuxième sous-zone (SZ2) étant respectivement mis en œuvre à nouveau en fonction des signaux de commande respectifs, pondérés, des haut-parleurs.

9. Procédé selon l'une des revendications précédentes, dans lequel le nombre d'itérations du procédé, pour que la pression acoustique de la première sous-zone atteigne la pression acoustique cible, souhaitée dans la première sous-zone, est compris entre 10 et 1000, de préférence entre 200 et 800, et de préférence entre 400 et 500.

10. Procédé selon l'une des revendications 2 à 9, dans lequel le champ sonore choisi est un premier champ sonore, un deuxième champ sonore choisi étant en outre diffusé, audible sélectivement dans la deuxième sous-zone (SZ2), et dans lequel on cherche à rendre le deuxième champ sonore inaudible dans la première sous-zone (SZ1), les haut-parleurs ($HP_1$,...,$HP_N$) étant alimentés par des premiers signaux de commande respectifs ($S(HP_1$,...,$HP_N$)) pour émettre chacun un signal audio en continu correspondant au premier champ sonore choisi, et par des deuxièmes signaux de commande respectifs ($S(HP_1$,...,$HP_N$)) pour émettre chacun un signal audio en continu correspondant au deuxième champ sonore choisi,

les étapes du procédé selon l'une des revendications 1 à 9 étant appliquées à la première sous-zone, de manière à rendre inaudible le deuxième champ sonore dans la première sous-zone.

**11.** Procédé selon l'une des revendications précédentes, dans lequel chaque sous-zone (SZ1, SZ2) comprend au moins un microphone virtuel (MIC) et deux haut-parleurs ($HP_1$,...,$HP_N$), et de préférence chaque sous-zone (SZ1, SZ2) comprend au moins une dizaine de microphones virtuels (MIC) et au moins une dizaine de haut-parleurs ($HP_1$,...,$HP_N$).

**12.** Système de restitution sonore spatialisée à partir d'un réseau de haut-parleurs ($HP_1$,...,$HP_N$),en vue d'une diffusion d'un champ sonore choisi, audible sélectivement dans une première sous-zone (SZ1) prédéterminée d'une zone couverte par les haut-parleurs ($HP_1$,...,$HP_N$), ladite zone comportant en outre une deuxième sous-zone (SZ2) dans laquelle on cherche à rendre inaudible ledit champ sonore choisi, **caractérisé en ce qu'**il comprend une unité de traitement (TRAIT) adaptée pour le traitement et la mise en œuvre du procédé selon l'une quelconque des revendications 1 à 11.

**13.** Support de stockage d'un programme d'ordinateur, chargeable dans une mémoire associée à un processeur (PROC), et comprenant des portions de code pour la mise en œuvre d'un procédé selon l'une quelconque des revendications 1 à 11 lors de l'exécution dudit programme par le processeur.

**Patentansprüche**

**1.** EDV-gestütztes Verfahren für eine Raumklangwiedergabe ausgehend von einem Netz von Lautsprechern für eine Abstrahlung eines ausgewählten Klangfelds, selektiv hörbar in einer ersten vorbestimmten Teilzone (SZ1) einer von den Lautsprechern ($HP_1$, $HP_N$) abgedeckten Zone, wobei die Zone außerdem eine zweite Teilzone (SZ2) aufweist, in der versucht wird, das ausgewählte Klangfeld unhörbar zu machen,

wobei, da die Lautsprecher ($HP_1$, ..., $HP_N$) von

jeweiligen Steuersignalen ($S(HP_1$,...,$HP_N$)) gespeist werden, um je kontinuierlich ein Audiosignal zu senden, das Verfahren iterativ und kontinuierlich enthält:

- Schätzung eines Schalldrucks ($P_2$) in der zweiten Teilzone (SZ2) mindestens abhängig von den jeweiligen Steuersignalen ($S(HP_1$,...,$HP_N$)) der Lautsprecher ($HP_1$, ..., $HP_N$) und von einer jeweiligen Ausgangsgewichtung der Steuersignale ($S(HP_1$,...,$HP_N$)) der Lautsprecher ($HP_1$,...,$HP_N$),
- Berechnung eines Fehlers zwischen dem geschätzten Schalldruck ($P_2$) und einem gewünschten Ziel-Schalldruck ($Pt_2$) in der zweiten Teilzone (SZ2),
- und Berechnung und Anwendung jeweiliger Gewichtungen an die Steuersignale ($S(HP_1$,...,$HP_N$) ) der Lautsprecher abhängig vom Fehler,

wobei die Berechnung des Schalldrucks ($P_2$) in der zweiten Teilzone (SZ2) erneut abhängig von den jeweiligen gewichteten Steuersignalen ($S(HP_1$, ..., $HP_N$) ) der Lautsprecher ($HP_1$,...,$HP_N$) durchgeführt wird, wobei jede an einen Lautsprecher ($HP_1$,...,$HP_N$) angewendete Gewichtung einen ersten Term entsprechend einer in einer vorhergehenden Iteration berechneten Gewichtung und einen zweiten Term abhängig vom Fehler enthält.

**2.** Verfahren nach Anspruch 1, das vorab eine Bestimmung von Abständen zwischen mindestens einem Punkt der zweiten Teilzone (SZ2) und jeweiligen Positionen von Lautsprechern ($HP_1$,...,$HP_N$) aufweist, um daraus Schallübertragungsfunktionen der Lautsprecher ($HP_1$,...,$HP_N$) an dem Punkt abzuleiten,

wobei der Punkt so einer Position eines virtuellen Mikrophons (MIC) entspricht, wobei die Schätzung des Schalldrucks ($P_2$) in der zweiten Teilzone (SZ2) dann unter Berücksichtigung einer an jeden Lautsprecher ($HP_1$,...,$HP_N$) angewendeten Ausgangsgewichtung und der jedem Lautsprecher ($HP_1$, ..., $HP_N$) eigenen Übertragungsfunktion am virtuellen Mikrophon (MIC) in der zweiten Teilzone (SZ2) ausgeführt wird, und außerdem eine Bestimmung von Abständen zwischen mindestens einem Punkt der ersten Teilzone (SZ1) und jeweiligen Positionen von Lautsprechern ($HP_1$, ...,$HP_N$) aufweist, um daraus Schallübertragungsfunktionen der Lautsprecher ($HP_1$,...,$HP_N$) an dem Punkt der ersten Teilzone (SZ1) abzuleiten, wobei der Punkt so einer Position eines zweiten virtuellen Mikrophons (MIC) entspricht.

3. Verfahren nach Anspruch 2, wobei eine Vielzahl von Punkten mindestens in der Teilzone (SZ2) vorgesehen wird, die die jeweiligen Positionen einer Vielzahl von virtuellen Mikrophonen (MIC) bilden, um eine Vielzahl von jeweiligen Schalldrücken ($P_2$) in der zweiten Teilzone (SZ2) unter Berücksichtigung der jeweiligen an jeden Lautsprecher ($HP_1$,...,$HP_N$) angewendeten Gewichtung und der jedem Lautsprecher ($HP_1$, ..., $HP_N$) eigenen Übertragungsfunktionen an jedem virtuellen Mikrophon (MIC) zu schätzen.

4. Verfahren nach einem der Ansprüche 2 oder 3, wobei der Zieldruck ($Pt_2$) in der zweiten Teilzone (SZ2) abhängig von einem gewünschten Klangkontrast (Cc) zwischen der ersten Teilzone (SZ1) und der zweiten Teilzone (SZ2) ermittelt wird, und das eine Schätzung aufweist:

   - des Schalldrucks ($P_1$) in der ersten Teilzone (SZ1) unter Berücksichtigung der an jeden Lautsprecher ($HP_1$,...,$HP_N$) angewendeten Gewichtung und der jedem Lautsprecher ($HP_1$, ..., $HP_N$) eigenen Übertragungsfunktion an dem mindestens einen zweiten virtuellen Mikrophon (MIC),
   - und daher, des Klangkontrasts (C) abhängig vom geschätzten Schalldruck ($P_1$) in der ersten Teilzone (SZ1) und vom geschätzten Schalldruck ($P_2$) in der zweiten Teilzone.

5. Verfahren nach Anspruch 4, wobei bei jeder Iteration ein durch die Differenz zwischen dem gewünschten Klangkontrast ($C_c$) und dem geschätzten Klangkontrast (C) zwischen der ersten Teilzone (SZ1) und der zweiten Teilzone (SZ2) definierter Dämpfungskoeffizient an den Schalldruck ($P_2$) in der zweiten Teilzone (SZ2) angewendet wird, wobei der Zieldruck ($Pt_2$) in der zweiten Teilzone (SZ2) dann den Wert des gedämpften Schalldrucks der zweiten Teilzone annimmt.

6. Verfahren nach einem der Ansprüche 2 bis 5, das vorab für jeden Hörer aufweist:

   - Erhalt von Geolokalisierungsdaten eines Hörers in der Zone mittels eines Positionssensors,
   - Definition der ersten Teilzone (SZ1) als entsprechend den Geolokalisierungsdaten sowie der Position des mindestens einen zweiten virtuellen Mikrophons (MIC) in der ersten Teilzone (SZ1),
   - Definition der zweiten Teilzone (SZ2) als komplementär zur ersten Teilzone (SZ1) sowie der Position des mindestens einen ersten virtuellen Mikrophons (MIC) in der zweiten Teilzone (SZ2).

7. Verfahren nach einem der Ansprüche 2 bis 6, das außerdem für jeden Hörer aufweist:

   - wiederholter Erhalt von Geolokalisierungsdaten des Hörers in der Zone mittels eines Positionssensors, und im Fall einer Änderung der Geolokalisierungsdaten:

      ➢ dynamische Definition der ersten Teilzone (SZ1) als den Geolokalisierungsdaten entsprechend und der Position des mindestens einen zweiten virtuellen Mikrophons (MIC) in der ersten Teilzone (SZ1),
      ➢ dynamische Definition der zweiten Teilzone (SZ2) als komplementär zur ersten Teilzone (SZ1) sowie der Position des mindestens einen ersten virtuellen Mikrophons (MIC) in der zweiten Teilzone (SZ2),

   wobei die Abstände zwischen dem mindestens einen ersten virtuellen Mikrophon (MIC) und den jeweiligen Positionen der Lautsprecher ($HP_1$,...,$HP_N$) dynamisch berechnet werden, um daraus die jeweiligen Schallübertragungsfunktionen der Lautsprecher ($HP_1$, ..., $HP_N$) an dem mindestens einen ersten virtuellen Mikrophon (MIC) abzuleiten, und
   wobei die Schätzung des Schalldrucks ($P_2$) in der zweiten Teilzone (SZ2) dann unter Berücksichtigung der jeweiligen an jeden Lautsprecher ($HP_1$, ...,$HP_N$) angewendeten Gewichtung ausgeführt wird,
   wobei jede an einen Lautsprecher ($HP_1$,...,$HP_N$) angewendete Gewichtung einen ersten Term entsprechend einer in einer vorhergehenden Iteration berechneten Gewichtung und einen zweiten Term abhängig vom Fehler enthält, wobei ein Vergessenskoeffizient, der den Term entsprechend der bei der vorhergehenden Iteration berechneten Gewichtung dämpft, dann an jede jeweilige Gewichtung angewendet wird.

8. Verfahren nach einem der Ansprüche 2 bis 7, das außerdem iterativ und kontinuierlich aufweist:

   - Schätzung des Schalldrucks ($P_1$) in der ersten Teilzone abhängig von den jeweiligen Steuersignalen der Lautsprecher (S ($HP_1$, ..., $HP_N$) ) am mindestens einen zweiten virtuellen Mikrophon (MIC) und von der jeweiligen Gewichtung der Steuersignale der Lautsprecher,
   - Berechnung einer Verschlechterung zwischen dem geschätzten Schalldruck ($P_1$) in der ersten Teilzone (SZ1) und einem gewünschten Ziel-Schalldruck ($Pt_1$) in der ersten Teilzone, wobei der Ziel-Schalldruck ($Pt_1$) vorab definiert wird,
   - und Anwendung von jeweiligen Gewichtungen an die Steuersignale der Lautsprecher

$(S(HP_1, ..., HP_N))$ abhängig von der Verschlechterung, damit der Schalldruck $(P_1)$ in der ersten Teilzone den Zieldruck $(Pt_1)$ erreicht,

wobei die Berechnung des Schalldrucks $(P_1, P_2)$ in der ersten Teilzone (SZ1) und in der zweiten Teilzone (SZ2) jeweils erneut abhängig von den jeweiligen gewichteten Steuersignalen der Lautsprecher durchgeführt wird.

9. Verfahren nach einem der vorhergehenden Ansprüche, wobei die Anzahl von Iterationen des Verfahrens, damit der Schalldruck der ersten Teilzone den in der ersten Teilzone gewünschten Ziel-Schalldruck erreicht, zwischen 10 und 1000, vorzugsweise zwischen 200 und 800, und vorzugsweise zwischen 400 und 500 liegt.

10. Verfahren nach einem der Ansprüche 2 bis 9, wobei das ausgewählte Klangfeld ein erstes Klangfeld ist, wobei außerdem ein ausgewähltes zweites Klangfeld abgestrahlt wird, das in der zweiten Teilzone (SZ2) selektiv hörbar ist, und wobei versucht wird, das zweite Klangfeld in der ersten Teilzone (SZ1) unhörbar zu machen, wobei die Lautsprecher $(HP_1, ..., HP_N)$ von ersten jeweiligen Steuersignalen $(S(HP_1, ..., HP_N))$, um je kontinuierlich ein Audiosignal zu senden, das dem ersten ausgewählten Klangfeld entspricht, und von zweiten jeweiligen Steuersignalen $(S(HP_1, ..., HP_N))$ gespeist werden, um je kontinuierlich ein Audiosignal zu senden, das dem zweiten ausgewählten Klangfeld entspricht, wobei die Schritte des Verfahrens nach einem der Ansprüche 1 bis 9 an die erste Teilzone angewendet werden, um das zweite Klangfeld in der ersten Teilzone unhörbar zu machen.

11. Verfahren nach einem der vorhergehenden Ansprüche, wobei jede Teilzone (SZ1, SZ2) mindestens ein virtuelles Mikrophon (MIC) und zwei Lautsprecher $(HP_1, ..., HP_N)$ enthält, und vorzugsweise jede Teilzone (SZ1, SZ2) mindestens etwa zehn virtuelle Mikrophone (MIC) und mindestens etwa zehn Lautsprecher $(HP_1, ..., HP_N)$ enthält.

12. System zur Raumklangwiedergabe ausgehend von einem Netz von Lautsprechern $(HP_1, ..., HP_N)$ zur Abstrahlung eines ausgewählten Klangfelds, das in einer vorbestimmten ersten Teilzone (SZ1) einer von den Lautsprechern $(HP_1, ..., HP_N)$ abgedeckten Zone selektiv hörbar ist, wobei die Zone außerdem eine zweite Teilzone (SZ2) aufweist, in der versucht wird, das ausgewählte Klangfeld unhörbar zu machen, **dadurch gekennzeichnet, dass** es eine Verarbeitungseinheit (TRAIT) enthält, die zur Verarbeitung und zur Durchführung des Verfahrens nach einem der Ansprüche 1 bis 11 geeignet ist.

13. Speicherträger eines Computerprogramms, das in einen einem Prozessor (PROC) zugeordneten Speicher geladen werden kann und Codeabschnitte für die Durchführung eines Verfahrens nach einem der Ansprüche 1 bis 11 bei der Ausführung des Programms durch den Prozessor enthält.

**Claims**

1. Method assisted by computational means, for spatialized sound rendering using an array of loudspeakers, with a view to delivering a chosen sound field that is selectively audible in a predetermined first sub-region (SZ1) of a region covered by the loudspeakers $(HP_1, HP_N)$, said region further comprising a second sub-region (SZ2) in which it is sought to make said chosen sound field inaudible,

   wherein, the loudspeakers $(HP_1, ..., HP_N)$ being fed with respective command signals $(S(HP_1, ..., HP_N))$ so that each continuously emits an audio signal, the method comprises, iteratively and continuously:

   - estimating an acoustic pressure $(P_2)$ in the second sub-region (SZ2), at least depending on the respective command signals $(S(HP_1, ..., HP_N))$ of the loudspeakers $(HP_1, ..., HP_N)$ and on an initial respective weight of the command signals $(S(HP_1, ..., HP_N))$ of the loudspeakers $(HP_1, ..., HP_N)$,
   - computing an error between the estimated acoustic pressure $(P_2)$ and a target acoustic pressure $(Pt_2)$, desired in the second sub-region (SZ2),
   - and computing and applying respective weights to the command signals $(S(HP_1, ..., HP_N))$ of the loudspeakers, depending on said error,

   the acoustic pressure $(P_2)$ in the second sub-region (SZ2) being computed again depending on the respective weighted command signals $(S(HP_1, ..., HP_N))$ of the loudspeakers $(HP_1, ..., HP_N)$, each respective weight applied to one loudspeaker $(HP_1, ..., HP_N)$ comprising a first term corresponding to a respective weight computed in a preceding iteration and a second term dependent on the error.

2. Method according to Claim 1, comprising beforehand determining distances between at least one point of the second sub-region (SZ2) and respective positions of loudspeakers $(HP_1, ..., HP_N)$, with a view to deducing therefrom respective acoustic transfer functions of the loudspeakers $(HP_1, ..., HP_N)$ to said point,

said point thus corresponding to a position of a virtual microphone (MIC),

the acoustic pressure ($P_2$) in the second sub-region (SZ2) then being estimated taking into account an initial weight applied to each loudspeaker ($HP_1, HP_N$) and the transfer function specific to each loudspeaker ($HP_1, HP_N$) to the virtual microphone (MIC) in the second sub-region (SZ2),

and further comprising determining distances between at least one point of the first sub-region (SZ1) and respective positions of loudspeakers ($HP_1,...,HP_N$), with a view to deducing therefrom respective acoustic transfer functions of the loudspeakers ($HP_1, HP_N$) to said point of the first sub-region (SZ1),

said point thus corresponding to a position of a second virtual microphone (MIC).

3. Method according to Claim 2, wherein provision is made for a plurality of points at least in the second sub-region (SZ2) forming the respective positions of a plurality of virtual microphones (MIC), with a view to estimating a plurality of respective acoustic pressures ($P_2$) in the second sub-region (SZ2) taking into account the respective weight applied to each loudspeaker ($HP_1, HP_N$) and transfer functions specific to each loudspeaker ($HP_1, ..., HP_N$) to each virtual microphone (MIC).

4. Method according to either of Claims 2 and 3, wherein the target pressure ($Pt_2$) in the second sub-region (SZ2) is evaluated depending on a desired sound contrast ($C_c$) between the first sub-region (SZ1) and the second sub-region (SZ2), and comprising an estimation of:

   - the acoustic pressure ($P_1$) in the first sub-region (SZ1) taking into account the respective weight applied to each loudspeaker ($HP_1, ..., HP_N$) and the transfer function specific to each loudspeaker ($HP_1,..., HP_N$) to the at least one second virtual microphone (MIC),
   - and then, the sound contrast (C) depending on the estimated acoustic pressure ($P_1$) in the first sub-region (SZ1) and the estimated acoustic pressure in the second sub-region ($P_2$).

5. Method according to Claim 4, wherein, in each iteration, an attenuation coefficient, defined by the difference between the desired sound contrast ($C_c$) and the estimated sound contrast (C) between the first sub-region (SZ1) and the second sub-region (SZ2), is applied to the acoustic pressure ($P_2$) in the second sub-region (SZ2),

the target pressure ($Pt_2$) in the second sub-region (SZ2) then taking the value of the attenuated acoustic pressure in the second sub-region.

6. Method according to one of Claims 2 to 5, comprising beforehand, for each listener:

   - obtaining geolocation data regarding a geolocation of a listener in the region by means of a position sensor,
   - defining the first sub-region (SZ1) as corresponding to said geolocation data and the position of said at least one second virtual microphone (MIC) in said first sub-region (SZ1),
   - defining the second sub-region (SZ2) as being complementary to the first sub-region (SZ1) and the position of said at least one first virtual microphone (MIC) in said second sub-region (SZ2).

7. Method according to one of Claims 2 to 6, further comprising, for each listener:

   - repetitively obtaining geolocation data of the listener in the region by means of a position sensor, and in case of a change in the geolocation data:

      ➢ dynamically defining the first sub-region (SZ1) as corresponding to said geolocation data and the position of said at least one second virtual microphone (MIC) in said first sub-region (SZ1),
      ➢ dynamically defining the second sub-region (SZ2) as being complementary to the first sub-region (SZ1) and the position of said at least one first virtual microphone (MIC) in said second sub-region (SZ2),

   the distances between said at least one first virtual microphone (MIC) and the respective positions of the loudspeakers ($HP_1,...,HP_N$) being computed dynamically with a view to deducing therefrom the respective acoustic transfer functions of the loudspeakers ($HP_1, HP_N$) to said at least one first virtual microphone (MIC), and the acoustic pressure ($P_2$) in the second sub-region (SZ2) then being estimated taking into account the respective weight applied to each loudspeaker ($HP_1, ..., HP_N$),

   each respective weight applied to one loudspeaker ($HP_1, HP_N$) comprising a first term corresponding to a respective weight computed in a preceding iteration and a second term dependent on the error, a forgetting coefficient that attenuates the term corresponding to the weight computed in the preceding iteration then being applied to each respective weight.

8. Method according to one of Claims 2 to 7, further comprising, iteratively and continuously:

- estimating the acoustic pressure ($P_1$) in the first sub-region, depending on said respective command signals ($S(HP_1,...,HP_N)$ ) of the loudspeakers to the at least one second virtual microphone (MIC) and on the respective weight of the command signals of the loudspeakers,

- computing a degradation between the estimated acoustic pressure ($P_1$) in the first sub-region (SZ1) and a target acoustic pressure ($Pt_1$), desired in the first sub-region, said target acoustic pressure (**$Pt_1$**) being defined beforehand,

- and applying respective weights to the command signals ($S(HP_1,...,HP_N)$) of the loudspeakers, depending on said degradation, in order that the acoustic pressure ($P_1$) in the first sub-region reaches the target pressure (**$Pt_1$**),

the acoustic pressure ($P_1$, $P_2$) in the first sub-region (SZ1) and in the second sub-region (SZ2), respectively, being computed again depending on the respective weighted command signals of the loudspeakers.

9. Method according to one of the preceding claims, wherein the number of iterations of the method required for the acoustic pressure in the first sub-region to reach the target acoustic pressure desired in the first sub-region is comprised between 10 and 1000, preferably between 200 and 800, and more preferably between 400 and 500.

10. Method according to one of Claims 2 to 9, wherein the chosen sound field is a first sound field, a second chosen sound field further being delivered, said field being selectively audible in the second sub-region (SZ2), and wherein it is sought to make the second sound field inaudible in the first sub-region (SZ1), the loudspeakers ($HP_1,...,HP_N$) being fed with respective first command signals ($S(HP_1,...,HP_N)$) so that each continuously emits an audio signal corresponding to the first chosen sound field, and with respective second command signals ($S(HP_1,...,HP_N)$) so that each continuously emits an audio signal corresponding to the second chosen sound field, the steps of the method according to one of Claims 1 to 9 being applied to the first sub-region, so as to make the second sound field inaudible in the first sub-region.

11. Method according to one of the preceding claims, wherein each sub-region (SZ1, SZ2) comprises at least one virtual microphone (MIC) and two loudspeakers ($HP_1,...,HP_N$), and preferably each sub-region (SZ1, SZ2) comprises at least about ten virtual microphones (MIC) and at least about ten loudspeakers ($HP_1,HP_N$) .

12. Spatialized sound rendering system based on an array of loudspeakers ($HP_1, ..., HP_N$), with a view to delivering a chosen sound field that is selectively audible in a predetermined first sub-region (SZ1) of a region covered by the loudspeakers ($HP_1,...,HP_N$), said region further comprising a second sub-region (SZ2) in which it is sought to make said chosen sound field inaudible, **characterized in that** it comprises a processing unit (TRAIT) configured to process and implement the method according to any one of Claims 1 to 11.

13. Medium for storing a computer program, loadable into a memory associated with a processor (PROC), and comprising code segments for implementing a method according to any one of Claims 1 to 11 on execution of said program by the processor.

FIG. 1

CREA
MIC$_1$...MIC$_M$  — S1

n ←

Pos (U1, U2)  — S0

S3 — DIST (MIC$_i$...HP$_i$) ←

Pos HP$_1$...HP$_n$ — S2

CALC F$_{transf}$ — S4

Calc P$_1$ (MIC$_1$...MIC$_N$),
P$_2$ (MIC$_{N+1}$...MIC$_M$) — S5

Calc L$_1$(MIC$_1$...MIC$_N$),
L$_2$(MIC$_{N+1}$...MIC$_M$) — S6

FIG. 2a

Calc C$_1$(MIC$_1$...MIC$_N$) -
C$_2$(MIC$_{N+1}$...MIC$_M$) -
C$_c$ — S8

n ←

C$_c$ — S7

Calc coeff att
Pt$_2$ = att . P$_2$ — S9

vers FIG. 2b

de FIG. 2a

FIG. 2b

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T. BETLEHEM ; W. ZHANG ; M. A. POLETTI ; T. ABHAYAPALA.** Personal Sound Zones : Delivering interface-free audio to multiple listeners. *IEEE,* Mars 2015, (1053-5888/15), 81-91